# EUROPEAN PATENT APPLICATION

(11) **EP 4 848 803 A1**
(43) Date of publication of application: **02.12.2026**
(21) Application number: 24921828.0
(22) Date of filing: 31.12.2024
(51) Int. Cl.: H04W 28/06

(54) **COMMUNICATION METHOD AND APPARATUS, AND DEVICE AND STORAGE MEDIUM**

(30) Priority: 31.01.2024 CN 202410144748
(71) Applicant: Huawei Technologies Co., Ltd., Shenzhen, Guangdong 518129 (CN)
(72) Inventor: LIANG, Han, Shenzhen, Guangdong 518129 (CN); RUAN, Wei, Shenzhen, Guangdong 518129 (CN); MA, Yunsi, Shenzhen, Guangdong 518129 (CN)
(74) Representative: Huawei European IPR
(86) International application number: PCT/CN2024/144206
(87) International publication number: WO 2025/161806

(57) **Abstract**

A communication method and apparatus, a device, and a storage medium are provided. The method includes: A communication apparatus generates a Wi-Fi frame, where the Wi-Fi frame includes a first preamble and a second preamble, and a transmission distance of a synchronization sequence in the first preamble is greater than a transmission distance of a synchronization sequence in the second preamble; and a first communication apparatus sends the Wi-Fi frame. In this way, long-range communication between Wi-Fi devices is implemented by using the synchronization sequence in the first preamble.

## Description

This application claims priority to Chinese Patent Application No. 202410144748.2, filed with the China National Intellectual Property Administration on January 31, 2024 and entitled "COMMUNICATION METHOD AND APPARATUS, DEVICE, AND STORAGE MEDIUM", which is incorporated herein by reference in its entirety.

### TECHNICAL FIELD

This application relates to the field of communication technologies, and in particular, to a communication method and apparatus, a device, and a storage medium.

### BACKGROUND

In a wireless fidelity Wi-Fi system, an access point (access point, AP) device, as a provider of a Wi-Fi network, allows another wireless device to access the Wi-Fi network, and provides data access for the accessing device. The device that accesses the Wi-Fi network may be referred to as a station (station, STA). The STA may have a plurality of applications. For example, an internet of things (internet of things, IoT) product in a home network may be used as a STA to implement smart home in a Wi-Fi network. IoT products that can be covered in the Wi-Fi system are related to coverage of the Wi-Fi network. Due to popularization of the IoT products, types and a quantity of IoT products continuously increase, and in particular, IoT devices that are deployed outdoors or in corners of rooms, such as video intercoms, monitoring devices, and sensor devices, need to be covered, imposing increasingly high requirements on the coverage of the Wi-Fi network.

Therefore, how to expand the coverage of the Wi-Fi network to implement long-range communication between Wi-Fi devices is an urgent problem to be resolved currently.

### SUMMARY

Embodiments of this application provide a communication method and apparatus, a device, and a storage medium, to expand coverage of a Wi-Fi network, thereby implementing long-range communication between Wi-Fi devices.

According to a first aspect, an embodiment of this application provides a communication method. The method may be performed by a first communication apparatus. The first communication apparatus may be understood as a communication apparatus that sends a signal. The first communication apparatus may be a Wi-Fi device, or a Wi-Fi chip, a functional module, a processing system, or the like disposed in the Wi-Fi device.

For example, the first communication apparatus generates a Wi-Fi frame, where the Wi-Fi frame includes a first preamble and a second preamble, and a transmission distance of a synchronization sequence in the first preamble is greater than a transmission distance of a synchronization sequence in the second preamble; and the first communication apparatus sends the Wi-Fi frame. In this way, long-range communication between Wi-Fi devices is implemented by using the synchronization sequence in the first preamble.

With reference to the first aspect, in some possible implementations, the transmission distance of the synchronization sequence in the first preamble is related to at least one of the following:
1.1. The synchronization sequence in the first preamble is obtained by spreading the synchronization sequence in the second preamble. The first communication apparatus obtains the first preamble through spreading, to increase a spreading gain of the first communication apparatus, thereby extending a transmission distance of the first preamble.
1.2. Transmit power of the synchronization sequence in the first preamble is greater than transmit power of the synchronization sequence in the second preamble. The transmission distance of the synchronization sequence in the first preamble is extended by increasing the transmit power.
1.3. The synchronization sequence in the first preamble is repeatedly sent, or the first preamble includes a plurality of repeated synchronization sequences. The transmission distance of the synchronization sequence in the first preamble is extended by repeatedly transmitting the synchronization sequence in the first preamble.

With reference to the first aspect, in some possible implementations, a transmission distance of a start frame delimiter (start of frame delimiter, SFD) in the first preamble is greater than a transmission distance of an SFD in the second preamble. In this way, the long-range communication between the Wi-Fi devices is implemented by using the SFD in the first preamble.

With reference to the first aspect, in some possible implementations, the second preamble precedes the SFD in the first preamble. This avoids interfering with receiving of a data part following the SFD.

With reference to the first aspect, in some possible implementations, the transmission distance of the SFD in the first preamble is related to at least one of the following:
2.1. The SFD in the first preamble is encoded by using a forward error correction (forward error correction, FEC) technology. FEC is an encoding technology widely applied to communication systems, enhances an anti-interference capability of encoded content and strengthens both encoding error correction and error detection capabilities by adding redundancy check information, and effectively reduces a system bit error rate and extends a transmission distance with quite low redundancy overheads.
2.2. Transmit power of the SFD in the first preamble is greater than transmit power of the SFD in the second preamble. The transmission distance of the SFD in the first preamble is extended by increasing the transmit power.
2.3. The SFD in the first preamble is repeatedly sent, or the first preamble includes a plurality of repeated SFDs. The transmission distance of the SFD in the first preamble is extended by repeatedly transmitting the SFD in the first preamble.

With reference to the first aspect, in some possible implementations, the SFD in the first preamble carries check information. This improves an anti-interference capability of encoded content, effectively reduces a system bit error rate, and further extends the transmission distance.

With reference to the first aspect, in some possible implementations, the Wi-Fi frame further includes a first header and a second header, and a transmission distance of the first header is greater than a transmission distance of the second header. In this way, the long-range communication between the Wi-Fi devices is implemented by using the first header.

With reference to the first aspect, in some possible implementations, the SFD in the first preamble indicates to receive the first header.

With reference to the first aspect, in some possible implementations, the second header precedes the SFD in the first preamble. This avoids interfering with receiving of the data part following the SFD.

With reference to the first aspect, in some possible implementations, information about the first header includes at least one of the following:
a length of a physical layer service data unit PSDU in the Wi-Fi frame;
FEC encoding information of the PSDU in the Wi-Fi frame;
information about repeated sending of the PSDU in the Wi-Fi frame;
power enhancement information of the PSDU in the Wi-Fi frame;
modulation information of the PSDU in the Wi-Fi frame;
a reserved field of the first header; or
check information of the first header.

In this implementation, the information about the first header includes related information of the PSDU in the Wi-Fi frame, so that a receive end demodulates the PSDU. In addition, the reserved field in the information about the first header is reserved for a subsequent extended function, to improve applicability of the Wi-Fi frame. The check information in the information about the first header can improve an anti-interference capability of encoded content, effectively reduce the system bit error rate, and further extend the transmission distance.

With reference to the first aspect, in some possible implementations, the transmission distance of the first header is related to at least one of the following:
3.1. The first header is encoded by using the FEC technology. This extends the transmission distance.
3.2. Transmit power of the first header is greater than transmit power of the second header. The transmission distance of the first header is extended by increasing the transmit power.
3.3. The first header is repeatedly sent, or the Wi-Fi frame includes a plurality of repeated first headers. The transmission distance of the first header is extended by repeatedly transmitting the first header.

With reference to the first aspect, in some possible implementations, the second header includes a bit used to carry indication information, and the indication information indicates whether the Wi-Fi frame is a legacy Wi-Fi frame. This helps the receive end identify a type of the Wi-Fi frame and determine, based on whether the Wi-Fi frame is a legacy Wi-Fi frame, whether to receive the Wi-Fi frame, thereby implementing compatibility with a device that uses an existing Wi-Fi protocol.

With reference to the first aspect, in some possible implementations, a reserved field of the second header is used to carry the indication information. This avoids occupying another field in the second header, without affecting transmission of other signaling.

With reference to the first aspect, in some possible implementations, the second header includes a length field, and the length field indicates the length of the PSDU in the Wi-Fi frame. This implements compatibility with the device that uses the existing Wi-Fi protocol.

With reference to the first aspect, in some possible implementations, the Wi-Fi frame further includes the PSDU, and a transmission distance of the PSDU is related to at least one of the following:
4.1. The PSDU is encoded by using the FEC technology. This extends the transmission distance.
4.2. Transmit power of the PSDU is greater than transmit power of a legacy PSDU. The transmission distance of the PSDU is extended by increasing the transmit power.
4.3. The PSDU is repeatedly sent, or the Wi-Fi frame includes a plurality of repeated PSDUs. The transmission distance of the PSDU is extended by repeatedly transmitting the PSDU.

With reference to the first aspect, in some possible implementations, the PSDU in the Wi-Fi frame carries check information. This effectively reduces the system bit error rate, and further extends the transmission distance.

According to a second aspect, an embodiment of this application provides a communication method. The method may be performed by a second communication apparatus. The second communication apparatus may be understood as a communication apparatus that receives a signal. The second communication apparatus may be a Wi-Fi device, or a Wi-Fi chip, a functional module, a processing system, or the like disposed in the Wi-Fi device.

For example, the second communication apparatus receives a Wi-Fi frame, where the Wi-Fi frame includes a first preamble and a second preamble, and a transmission distance of a synchronization sequence in the first preamble is greater than a transmission distance of a synchronization sequence in the second preamble; and the second communication apparatus obtains the synchronization sequence in the first preamble.

With reference to the second aspect, in some possible implementations, the transmission distance of the synchronization sequence in the first preamble is related to at least one of the following:
1.1. The synchronization sequence in the first preamble is obtained by spreading the synchronization sequence in the second preamble.
1.2. Transmit power of the synchronization sequence in the first preamble is greater than transmit power of the synchronization sequence in the second preamble.
1.3. The synchronization sequence in the first preamble is repeatedly sent, or the first preamble includes a plurality of repeated synchronization sequences.

With reference to the second aspect, in some possible implementations, a transmission distance of a start frame delimiter SFD in the first preamble is greater than a transmission distance of an SFD in the second preamble.

With reference to the second aspect, in some possible implementations, the second preamble precedes the SFD in the first preamble.

With reference to the second aspect, in some possible implementations, the transmission distance of the SFD in the first preamble is related to at least one of the following:
2.1. The SFD in the first preamble is encoded by using a forward error correction FEC technology.
2.2. Transmit power of the SFD in the first preamble is greater than transmit power of the SFD in the second preamble.
2.3. The SFD in the first preamble is repeatedly sent, or the first preamble includes a plurality of repeated SFDs.

With reference to the second aspect, in some possible implementations, the SFD in the first preamble carries check information.

With reference to the second aspect, in some possible implementations, the Wi-Fi frame further includes a first header and a second header, and a transmission distance of the first header is greater than a transmission distance of the second header.

With reference to the second aspect, in some possible implementations, the SFD in the first preamble indicates to receive the first header.

With reference to the second aspect, in some possible implementations, the second header precedes the SFD in the first preamble.

With reference to the second aspect, in some possible implementations, information about the first header includes at least one of the following:
a length of a physical layer service data unit PSDU in the Wi-Fi frame;
FEC encoding information of the PSDU in the Wi-Fi frame;
information about repeated sending of the PSDU in the Wi-Fi frame;
power enhancement information of the PSDU in the Wi-Fi frame;
modulation information of the PSDU in the Wi-Fi frame;
a reserved field of the first header; or
check information of the first header.

With reference to the second aspect, in some possible implementations, the transmission distance of the first header is related to at least one of the following:
3.1. The first header is encoded by using the FEC technology.
3.2. Transmit power of the first header is greater than transmit power of the second header.
3.3. The first header is repeatedly sent, or the Wi-Fi frame includes a plurality of repeated first headers.

With reference to the second aspect, in some possible implementations, the second header includes a bit used to carry indication information, and the indication information indicates whether the Wi-Fi frame is a legacy Wi-Fi frame.

With reference to the second aspect, in some possible implementations, a reserved field of the second header is used to carry the indication information.

With reference to the second aspect, in some possible implementations, the second header includes a length field, and the length field indicates the length of the PSDU in the Wi-Fi frame.

With reference to the second aspect, in some possible implementations, the Wi-Fi frame further includes the PSDU, and a transmission distance of the PSDU is related to at least one of the following:
4.1. The PSDU is encoded by using the FEC technology.
4.2. Transmit power of the PSDU is greater than transmit power of a legacy PSDU.
4.3. The PSDU is repeatedly sent, or the Wi-Fi frame includes a plurality of repeated PSDUs.

With reference to the second aspect, in some possible implementations, the PSDU in the Wi-Fi frame carries check information.

According to a third aspect, an embodiment of this application provides a communication apparatus, including: a processing module, configured to generate a Wi-Fi frame, where the Wi-Fi frame includes a first preamble and a second preamble, and a transmission distance of a synchronization sequence in the first preamble is greater than a transmission distance of a synchronization sequence in the second preamble; and a transceiver module, configured to send the Wi-Fi frame.

In some possible implementations, the transmission distance of the synchronization sequence in the first preamble is related to at least one of the following:
1.1. The synchronization sequence in the first preamble is obtained by spreading the synchronization sequence in the second preamble.
1.2. Transmit power of the synchronization sequence in the first preamble is greater than transmit power of the synchronization sequence in the second preamble.
1.3. The synchronization sequence in the first preamble is repeatedly sent, or the first preamble includes a plurality of repeated synchronization sequences.

In some possible implementations, a transmission distance of a start frame delimiter SFD in the first preamble is greater than a transmission distance of an SFD in the second preamble.

In some possible implementations, the second preamble precedes the SFD in the first preamble.

In some possible implementations, the transmission distance of the SFD in the first preamble is related to at least one of the following:
2.1. The SFD in the first preamble is encoded by using a forward error correction FEC technology.
2.2. Transmit power of the SFD in the first preamble is greater than transmit power of the SFD in the second preamble.
2.3. The SFD in the first preamble is repeatedly sent, or the first preamble includes a plurality of repeated SFDs.

In some possible implementations, the SFD in the first preamble carries check information.

In some possible implementations, the Wi-Fi frame further includes a first header and a second header, and a transmission distance of the first header is greater than a transmission distance of the second header.

In some possible implementations, the SFD in the first preamble indicates to receive the first header.

In some possible implementations, the second header precedes the SFD in the first preamble.

In some possible implementations, information about the first header includes at least one of the following:
a length of a physical layer service data unit PSDU in the Wi-Fi frame;
FEC encoding information of the PSDU in the Wi-Fi frame;
information about repeated sending of the PSDU in the Wi-Fi frame;
power enhancement information of the PSDU in the Wi-Fi frame;
modulation information of the PSDU in the Wi-Fi frame;
a reserved field of the first header; or
check information of the first header.

In some possible implementations, the transmission distance of the first header is related to at least one of the following:
3.1. The first header is encoded by using the FEC technology.
3.2. Transmit power of the first header is greater than transmit power of the second header.
3.3. The first header is repeatedly sent, or the Wi-Fi frame includes a plurality of repeated first headers.

In some possible implementations, the second header includes a bit used to carry indication information, and the indication information indicates whether the Wi-Fi frame is a legacy Wi-Fi frame.

In some possible implementations, a reserved field of the second header is used to carry the indication information.

In some possible implementations, the second header includes a length field, and the length field indicates the length of the PSDU in the Wi-Fi frame.

In some possible implementations, the Wi-Fi frame further includes the PSDU, and a transmission distance of the PSDU is related to at least one of the following:
4.1. The PSDU is encoded by using the FEC technology.
4.2. Transmit power of the PSDU is greater than transmit power of a legacy PSDU.
4.3. The PSDU is repeatedly sent, or the Wi-Fi frame includes a plurality of repeated PSDUs.

In some possible implementations, the PSDU in the Wi-Fi frame carries check information.

According to a fourth aspect, an embodiment of this application provides a communication apparatus, including:
a transceiver module, configured to receive a Wi-Fi frame, where the Wi-Fi frame includes a first preamble and a second preamble, and a transmission distance of a synchronization sequence in the first preamble is greater than a transmission distance of a synchronization sequence in the second preamble; and a processing module, configured to obtain the synchronization sequence in the first preamble.

In some possible implementations, the transmission distance of the synchronization sequence in the first preamble is related to at least one of the following:
1.1. The synchronization sequence in the first preamble is obtained by spreading the synchronization sequence in the second preamble.
1.2. Transmit power of the synchronization sequence in the first preamble is greater than transmit power of the synchronization sequence in the second preamble.
1.3. The synchronization sequence in the first preamble is repeatedly sent, or the first preamble includes a plurality of repeated synchronization sequences.

In some possible implementations, a transmission distance of a start frame delimiter SFD in the first preamble is greater than a transmission distance of an SFD in the second preamble.

In some possible implementations, the second preamble precedes the SFD in the first preamble.

In some possible implementations, the transmission distance of the SFD in the first preamble is related to at least one of the following:
2.1. The SFD in the first preamble is encoded by using an FEC technology.
2.2. Transmit power of the SFD in the first preamble is greater than transmit power of the SFD in the second preamble.
2.3. The SFD in the first preamble is repeatedly sent, or the first preamble includes a plurality of repeated SFDs.

In some possible implementations, the SFD in the first preamble carries check information.

In some possible implementations, the Wi-Fi frame further includes a first header and a second header, and a transmission distance of the first header is greater than a transmission distance of the second header.

In some possible implementations, the SFD in the first preamble indicates to receive the first header.

In some possible implementations, the second header precedes the SFD in the first preamble.

In some possible implementations, information about the first header includes at least one of the following:
a length of a physical layer service data unit PSDU in the Wi-Fi frame;
FEC encoding information of the PSDU in the Wi-Fi frame;
information about repeated sending of the PSDU in the Wi-Fi frame;
power enhancement information of the PSDU in the Wi-Fi frame;
modulation information of the PSDU in the Wi-Fi frame;
a reserved field of the first header; or
check information of the first header.

In some possible implementations, the transmission distance of the first header is related to at least one of the following:
3.1. The first header is encoded by using the FEC technology.
3.2. Transmit power of the first header is greater than transmit power of the second header.
3.3. The first header is repeatedly sent, or the Wi-Fi frame includes a plurality of repeated first headers.

In some possible implementations, the second header includes a bit used to carry indication information, and the indication information indicates whether the Wi-Fi frame is a legacy Wi-Fi frame.

In some possible implementations, a reserved field of the second header is used to carry the indication information.

In some possible implementations, the second header includes a length field, and the length field indicates the length of the PSDU in the Wi-Fi frame.

In some possible implementations, the Wi-Fi frame further includes the PSDU, and a transmission distance of the PSDU is related to at least one of the following:
4.1. The PSDU is encoded by using the FEC technology.
4.2. Transmit power of the PSDU is greater than transmit power of a legacy PSDU.
4.3. The PSDU is repeatedly sent, or the Wi-Fi frame includes a plurality of repeated PSDUs.

In some possible implementations, the PSDU in the Wi-Fi frame carries check information.

According to a fifth aspect, an embodiment of this application provides a first communication apparatus. The first communication apparatus includes a processor, configured to perform the method according to any one of the first aspect or the possible implementations thereof. The processor is configured to execute a program stored in a memory. When the program is executed, the method according to any one of the first aspect or the possible implementations thereof is performed.

In a possible implementation, the memory is located outside the first communication apparatus.

In a possible implementation, the memory is located inside the first communication apparatus.

In this embodiment of this application, the processor and the memory may alternatively be integrated into one component. In other words, the processor and the memory may alternatively be integrated together. For example, the first communication apparatus may be a chip.

In a possible implementation, the first communication apparatus further includes a transceiver. The transceiver is configured to receive information or send information.

According to a sixth aspect, an embodiment of this application provides a second communication apparatus. The second communication apparatus includes a processor, configured to perform the method according to any one of the second aspect or the possible implementations thereof. The processor is configured to execute a program stored in a memory. When the program is executed, the method according to any one of the second aspect or the possible implementations thereof is performed.

In a possible implementation, the memory is located outside the second communication apparatus.

In a possible implementation, the memory is located inside the second communication apparatus.

In this embodiment of this application, the processor and the memory may alternatively be integrated into one component. In other words, the processor and the memory may alternatively be integrated together. For example, the second communication apparatus may be a chip.

In a possible implementation, the second communication apparatus further includes a transceiver. The transceiver is configured to receive information or send information.

According to a seventh aspect, an embodiment of this application provides a first communication apparatus. The first communication apparatus includes a logic circuit and an interface. The logic circuit is coupled to the interface. The interface is configured to input and/or output information. The logic circuit is configured to perform the method according to any one of the first aspect or the possible implementations thereof.

According to an eighth aspect, an embodiment of this application provides a second communication apparatus. The second communication apparatus includes a logic circuit and an interface. The logic circuit is coupled to the interface. The interface is configured to input and/or output information. The logic circuit is configured to perform the method according to any one of the second aspect or the possible implementations thereof.

According to a ninth aspect, an embodiment of this application provides a computer-readable storage medium. The computer-readable storage medium is configured to store a computer program. When the computer program is run on a computer, the method according to any one of the first aspect, the second aspect, or the possible implementations of the first aspect and the second aspect is performed.

According to a tenth aspect, an embodiment of this application provides a computer program product. When the computer program product runs on a computer, the method according to any one of the first aspect, the second aspect, or the possible implementations of the first aspect and the second aspect is performed.

According to an eleventh aspect, an embodiment of this application provides a computer program. When the computer program is run on a computer, the method according to any one of the first aspect, the second aspect, or the possible implementations of the first aspect and the second aspect is performed.

According to a twelfth aspect, an embodiment of this application provides a communication system. The communication system includes a first communication apparatus and/or a second communication apparatus. The first communication apparatus is configured to perform the method according to any one of the first aspect or the possible implementations thereof. The second communication apparatus is configured to perform the method according to any one of the second aspect or the possible implementations thereof.

For beneficial effect of the technical solutions provided in the fifth aspect to the twelfth aspect and the possible implementations thereof, refer to the beneficial effect brought by the first aspect and the possible implementations thereof. Details are not described herein again.

### BRIEF DESCRIPTION OF DRAWINGS

FIG. 1 is a diagram of an architecture of a communication system according to an embodiment of this application;
FIG. 2 is a schematic flowchart of Wi-Fi transmission according to this application;
FIG. 3 is a diagram of a structure of a Wi-Fi frame according to this application;
FIG. 4 is a schematic flowchart of a communication method according to an embodiment of this application;
FIG. 5 is a diagram of a structure of an SFD according to an embodiment of this application;
FIG. 6 is a diagram of a structure of a header according to an embodiment of this application;
FIG. 7 is a diagram of a structure of a Wi-Fi frame according to an embodiment of this application;
FIG. 8 is a diagram of a structure of a communication apparatus according to an embodiment of this application;
FIG. 9 is a diagram of a structure of another communication apparatus according to an embodiment of this application; and
FIG. 10 is a diagram of a structure of another communication apparatus according to an embodiment of this application.

### DESCRIPTION OF EMBODIMENTS

For ease of understanding technical solutions in this application, the following further describes this application with reference to accompanying drawings.

Terms such as "first" and "second" in the specification, claims, and accompanying drawings of this application are merely intended to distinguish between different objects, but do not describe a specific sequence. In addition, terms such as "include" and "have" and any variants thereof are intended to cover a non-exclusive inclusion. For example, a process, method, system, product, or device that includes a series of steps or units is not limited to the listed steps or units, but optionally further includes an unlisted step or unit, or optionally further includes another inherent step or unit of the process, method, product, or device.

An "embodiment" mentioned in this specification means that a specific feature, structure, or characteristic described with reference to the embodiment may be included in at least one embodiment of this application. The phrase shown at locations in this specification may not necessarily mean a same embodiment, and is not an independent or optional embodiment exclusive from another embodiment. It may be explicitly and implicitly understood by a person skilled in the art that embodiments described in this specification may be combined with another embodiment.

In this application, "at least one" means one or more, "a plurality of" means two or more, "at least two" means two, three, or more, and "and/or" is used to describe an association relationship between associated objects, and represents that three relationships may exist. For example, "A and/or B" may represent the following three cases: Only A exists, only B exists, and both A and B exist, where A and B may be singular or plural. "Or" represents that two relationships may exist, for example, only A exists and only B exists. When A and B are not mutually exclusive, it may alternatively represent that three relationships exist, for example, only A exists, only B exists, and both A and B exist. A character "/" generally represents an "or" relationship between associated objects. "At least one of the following items (pieces)" or a similar expression thereof means any combination of these items. For example, at least one of a, b, or c may represent a, b, c, "a and b", "a and c", "b and c", or "a, b, and c".

The following describes a communication system in embodiments of this application.

Technical solutions provided in embodiments of this application may be applied to a wireless local area network (wireless local area network, WLAN) system, for example, Wi-Fi. For example, a method provided in embodiments of this application is applicable to institute of electrical and electronics engineers IEEE 802.11 series protocols, for example, the 801.11, 802.11b, 802.11a/g, 802.11n, 802.11ac, and 802.11ax protocols and a next-generation protocol. Details are not enumerated. The technical solutions provided in embodiments of this application may be further applied to a wireless personal area network (wireless personal area network, WPAN) based on millimeter wave (millimeter wave, MMW) and ultra-wideband (ultra-wideband, UWB) technologies, and the like. For example, the method provided in embodiments of this application is applicable to IEEE 802.15 series protocols, for example, the 802.15.4a protocol, the 802.15.4z protocol, the 802.15.4ab protocol, or a future generation UWB WPAN protocol. Details are not enumerated. The technical solutions provided in embodiments of this application may be further applied to the following communication systems, for example, an internet of things (internet of things, IoT) system, vehicle-to-everything (vehicle-to-everything, V2X, where X may represent everything), device-to-device (device-to-device, D2D), a narrowband internet of things (narrowband internet of things, NB-IoT) system, a long term evolution (long term evolution, LTE) system, a 5th-generation (5th-generation, 5G) communication system, and a new communication system emerging in future communication development. For example, the V2X may include vehicle to vehicle (vehicle to vehicle, V2V), vehicle to infrastructure (vehicle to infrastructure, V2I), vehicle to pedestrian (vehicle to pedestrian, V2P), or vehicle to network (vehicle to network, V2N) communication.

The WLAN system can provide high-speed and low-latency transmission. With continuous evolution of WLAN application scenarios, the WLAN system is to be used in more scenarios or industries, for example, the internet of things industry, the internet of vehicles industry, the banking industry, enterprise offices, stadiums, exhibition halls, concert halls, hotel rooms, dormitories, wards, classrooms, supermarkets, squares, streets, production workshops, and warehousing. Certainly, a device (for example, an access point or a station) that supports WLAN communication or sensing may be a sensor node (for example, a smart water meter, a smart electricity meter, or a smart air detection node) in a smart city, a smart device (for example, a smart camera, a projector, a display, a television, a speaker, a refrigerator, or a washing machine) in a smart home, a node in an internet of things, an entertainment terminal (for example, an augmented reality (augmented reality, AR) wearable device or a virtual reality (virtual reality, VR) wearable device), a smart device (for example, a printer, a projector, a loudspeaker, or a speaker) in a smart office, an internet of vehicles device in an internet of vehicles, infrastructure (for example, a vending machine, a self-service navigation console of a supermarket, a self-service cash register device, or a self-service ordering machine) in a daily life scenario, a device in a large stadium or music venue, or the like.

Although embodiments of this application mainly use a WLAN as an example, and are especially applied to a network using IEEE 802.11 series standards, embodiments of this application can also support Wi-Fi 8 that may also be referred to as ultra-high reliability (ultra-high reliability, UHR), ultra-high reliability and throughput (ultra-high reliability and throughput, UHRT), or the like. Details are not enumerated herein. Aspects in embodiments of this application may be extended to another network using various standards or protocols, for example, Bluetooth (Bluetooth), a high performance radio LAN (high performance radio LAN, HIPERLAN) (a wireless standard similar to an IEEE 802.11 standard), a wide area network (wide area network, WAN), or another network known currently or developed in the future.

In a possible implementation, the method provided in embodiments of this application may be implemented by a communication apparatus in the communication system. For example, the communication apparatus may be an access point (access point, AP) or a station (station, STA).

The AP is an apparatus having a wireless communication function, supports communication or sensing by using a WLAN protocol, has a function of communicating with or sensing another device (for example, a non-access point station (non-access point station, non-AP STA) or another access point) in the WLAN network, and certainly may further have a function of communicating with or sensing another device. Alternatively, the access point is equivalent to a bridge that connects a wired network to a wireless network. A main function of the access point is to connect wireless network clients together and then connect the wireless network to the Ethernet. In the WLAN system, the access point may be referred to as an access point station (AP STA). The apparatus having the wireless communication function may be an entire device, or may be a chip, a processing system, a functional module, or the like installed in the entire device. The device in which the chip, the processing system, or the functional module is installed may implement the method, a function, and the like in embodiments of this application under control of the chip, the processing system, or the functional module. The AP in embodiments of this application is an apparatus that provides a service for the non-AP STA, and may support the 802.11 series protocols, subsequent protocols, or the like. For example, the access point may be an access point for a terminal (for example, a mobile phone) to access a wired (or wireless) network, and is mainly deployed at home, inside a building, or inside a campus. A typical coverage radius is tens of meters to 100-odd meters. Certainly, the access point may alternatively be deployed outdoors. For another example, the AP may be a communication entity like a communication server, a router, a switch, or a bridge. The AP may include a macro base station, a micro base station, a relay station, and the like that are in various forms. Certainly, the AP may alternatively be a chip, a processing system, or a module in the foregoing devices in the various forms, to implement the method and the function in embodiments of this application.

The STA is an apparatus having a wireless communication function, supports communication or sensing by using the WLAN protocol, and has a capability of communicating with or sensing another non-AP STA or access point in the WLAN network. In the WLAN system, the station may be referred to as a non-access point station (non-access point station, non-AP STA). For example, the STA is any user communication device that allows a user to communicate with or sense the AP and then communicate with the WLAN. The apparatus having the wireless communication function may be an entire device, or may be a chip, a processing system, a functional module, or the like installed in the entire device. The device in which the chip, the processing system, or the functional module is installed may implement the method and the function in embodiments of this application under control of the chip, the processing system, or the functional module. For example, the STA may be a wireless communication chip, a wireless sensor, or a wireless communication terminal, and may also be referred to as a user. For another example, the STA may be a mobile phone that supports a Wi-Fi communication function, a tablet computer that supports the Wi-Fi communication function, a set-top box that supports the Wi-Fi communication function, a smart television that supports the Wi-Fi communication function, a smart wearable device that supports the Wi-Fi communication function, a vehicle-mounted communication device that supports the Wi-Fi communication function, or a computer that supports the Wi-Fi communication function. Certainly, the STA may alternatively be a chip, a processing system, or a module in the foregoing devices in the various forms, to implement the method and the function in embodiments of this application.

For example, the communication system to which the method provided in embodiments of this application may be applied may include the access point and the station. For example, embodiments of this application are applicable to a scenario of communication or sensing between the AP and the STA, between APs, or between STAs in the WLAN. This is not limited in embodiments of this application. Optionally, the AP may communicate with or sense a single STA, or the AP may simultaneously communicate with or sense a plurality of STAs. Specifically, communication or sensing between the AP and the plurality of STAs may be further classified into downlink transmission in which the AP simultaneously sends signals to the plurality of STAs and uplink transmission in which the plurality of STAs send signals to the AP. A WLAN communication protocol may be supported between the AP and the STA, between the APs, and between the STAs. The communication protocol may include the IEEE 802.11 series protocols, for example, the 802.11b protocol is applicable, and certainly a protocol later than 802.11b is also applicable.

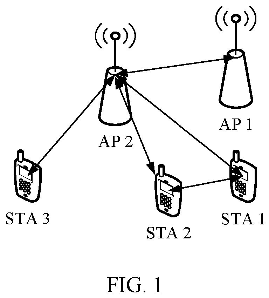

FIG. 1 is a diagram of an architecture of a communication system according to an embodiment of this application. The communication system may include one or more APs and one or more STAs. FIG. 1 shows two access points, for example, an AP 1 and an AP 2, and three stations, for example, a STA 1, a STA 2, and a STA 3. In an example, a method provided in embodiments of this application is applicable to data communication, sensing, or the like between one AP and one or more STAs, for example, communication between the AP 1 and the STA 1, communication between the AP 1 and the STA 1 and the STA 2, or communication between the AP 1 and the STA 1, the STA 2, and the STA 3 shown in FIG. 1. In another example, a method provided in embodiments of this application is applicable to communication between APs, for example, communication between the AP 1 and the AP 2 shown in FIG. 1. In still another example, a method provided in embodiments of this application is applicable to communication between STAs, for example, communication between the STA 2 and the STA 3 shown in FIG. 1.

In FIG. 1, an example in which the STA is a mobile phone and the AP is a router is used. This does not mean that types of the AP and the STA in this embodiment of this application are limited. In addition, the quantity of the APs and the quantity of the STAs shown in FIG. 1 are merely examples. During specific implementation, there may alternatively be more or fewer APs or STAs. This is not limited in embodiments of this application.

From different perspectives of sending a signal and receiving the signal, a first communication apparatus shown below may be understood as a communication apparatus that sends the signal, and a second communication apparatus shown below may be understood as a communication apparatus that receives the signal. Alternatively, the first communication apparatus may also be referred to as a transmit end, and the second communication apparatus may also be referred to as a receive end. In this embodiment of this application, the signal may be a signal obtained by processing an encoded sequence. From perspectives of different devices, in an example, the first communication apparatus and the second communication apparatus may be Wi-Fi chips, functional modules, processing systems, or the like disposed in different Wi-Fi devices. In another example, the first communication apparatus may be an AP, and the second communication apparatus may be a non-AP STA. In still another example, both the first communication apparatus and the second communication apparatus may be non-AP STAs or APs. In still another example, the first communication apparatus may be a non-AP STA, and the second communication apparatus may be an AP. In still another example, either of the first communication apparatus and the second communication apparatus may be a multi-link device (multi-link device, MLD) or the like. Details are not enumerated in embodiments of this application. For example, the multi-link device (multi-link device, MLD) means that the device has a plurality of stations (for example, APs or non-AP STAs) that respectively operate on different frequency bands or channels. The multi-link device includes a plurality of affiliated stations. The affiliated station may be a physical station, or may be a logical station. Each station may operate on one link, one frequency band, one channel, or the like. The affiliated station may be an AP or a non-AP STA. The multi-link device (for example, a non-AP MLD or an AP MLD) may be a communication apparatus having a wireless communication function. The communication apparatus may be an entire device, or may be a chip, a processing system, a module, or the like installed in the entire device. The device in which the chip, the processing system, or the module is installed may implement the method and a function in embodiments of this application under control of the chip, the processing system, or the module. The multi-link device may implement wireless communication according to the 802.11 series protocols, to communicate with another device. The another device herein may be a multi-link device, or may not be a multi-link device. Frequency bands on which the multi-link device operates may include but are not limited to sub 1 GHz, 2.4 GHz, 5 GHz, 6 GHz, and the like. Details are not enumerated herein.

In this embodiment of this application, the method provided in embodiments of this application is described from perspectives of the first communication apparatus and the second communication apparatus. However, in a process in which the first communication apparatus and the second communication apparatus transmit the signal, the signal may be further forwarded by another apparatus. For example, the signal between the first communication apparatus and the second communication apparatus is forwarded by a forwarding apparatus. An apparatus other than the first communication apparatus and the second communication apparatus is not limited in embodiments of this application.

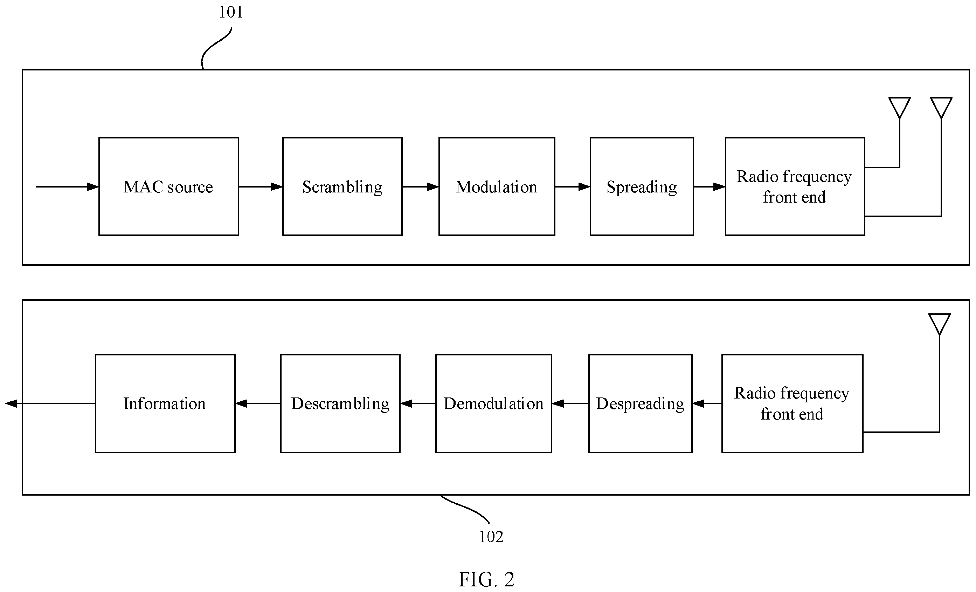

The following describes an example of the transmission process between the first communication apparatus and the second communication apparatus with reference to FIG. 2. FIG. 2 shows only a first communication apparatus 101 equipped with two antennas and a second communication apparatus 102 equipped with one antenna. During actual application, one or more antennas may be configured for both the first communication apparatus 101 and the second communication apparatus 102.

According to the Wi-Fi protocol of the 802.11b standard, a physical layer baseband processing module of the first communication apparatus 101 scrambles and modulates binary user data (namely, an information bit) of a MAC source to generate a modulated symbol, spreads the modulated symbol to generate a radio frequency signal, and sends the radio frequency signal through an antenna of a radio frequency front end. A physical layer baseband processing module of the second communication apparatus 102 performs despreading (or referred to as spectrum despreading, namely, an inverse process of spreading), demodulation, and descrambling (or referred to as code descrambling, namely, an inverse process of scrambling) on the radio frequency signal received by a radio frequency front end through an antenna, to restore the information bit, thereby completing sending and receiving of the information bit (namely, the binary user data).

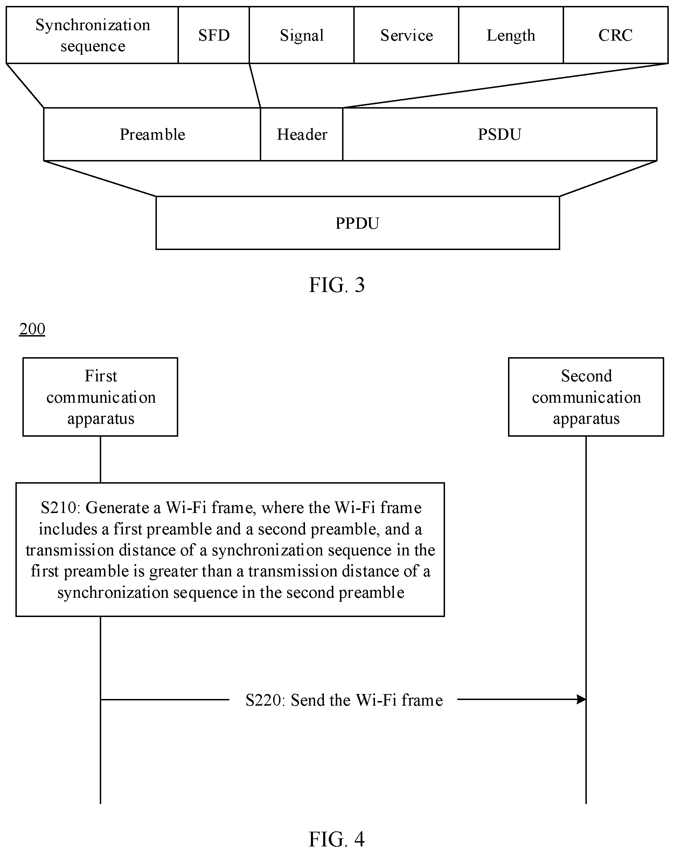

A Wi-Fi frame transmitted in the foregoing transmission process is also referred to as a Wi-Fi physical frame. As shown in FIG. 3, in the 802.11b standard, the Wi-Fi frame is used as a physical layer convergence protocol (physical layer convergence protocol, PLCP) data unit (PLCP data unit, PPDU). A Wi-Fi frame structure includes a PLCP preamble (referred to as a preamble for short), a PLCP header (header, referred to as a header for short), and a PLCP service data unit (PLCP service data unit, PSDU), and a payload (payload) is generally used as the PSDU.

The preamble includes a synchronization (synchronous, SYNC) sequence and an SFD. The SYNC sequence is used to wake up a receiver, so that the receiver synchronizes with the received signal. The SFD is used to notify the receiver that some parameters related to a MAC layer are transmitted immediately after the SFD ends.

Generally, a long preamble has a length of 144 bits, and includes a 128-bit synchronization sequence located at a front part and a 16-bit SFD located at a rear part. A short preamble has a length of 72 bits, and includes a 56-bit synchronization sequence located at a front part and a 16-bit SFD located at a rear part. The SYNC sequence of the long preamble is 128 bits of scrambled "1s" (for example, a seed code of a scrambler used for scrambling may be "1101100"), and the SYNC sequence of the short preamble is 56 bits of scrambled "0s". A value of the SFD may be, for example, 1111 0011 1010 0000. When the receiver receives the SFD, it represents that the following header is to be sent.

The preamble is generally modulated by using differential binary phase shift keying (differential binary phase shift keying, DBPSK) and sent at a rate of 1 Mbps. A modulation algorithm of the preamble is fixed. A modulation algorithm of the header may be DBPSK or quadrature binary phase shift keying (quadrature binary phase shift keying, QBPSK). The PSDU may use another modulation algorithm, for example, DBPSK, QBPSK, complementary code keying (complementary code keying, CCK) (CCK 5.5 or CCK 11), or direct sequence spread spectrum (direct sequence spread spectrum, DSSS). The header includes physical parameters related to data transmission. These parameters include a signal (SIGNAL), a service (SERVICE), a length (LENGTH) of to-be-transmitted data, and a 16-bit CRC check code. Based on these parameters, the receiver adjusts a receive rate, selects a decoding mode, and determines when to end data receiving. A signal (SIGNAL) field has a length of 8 bits, and defines a data transmission rate. The signal field has four values: 0Ah, 14h, 37h, and 6Eh, which respectively specify transmission rates of 1 Mbps, 2 Mbps, 5.5 Mbps, and 11 Mbps. The receiver adjusts the receive rate of the receiver based on the value. A service (SERVICE) field also has a length of 8 bits. The service field specifies a modulation code (CCK or packet binary convolutional coding (packet binary convolutional coding, PBCC)) to be used. A length (LENGTH) field has a length of 16 bits, and indicates duration (in a unit of microseconds) required to send the following PSDU. The 16-bit CRC check code is used to check whether received signal, service, and length fields are correct. The preamble and the header are sent at a fixed rate of 1 Mbps, and the PSDU may be transmitted at a rate of 1 Mbps (DBPSK modulation), 2 Mbps (DQPSK modulation), 5.5 Mbps (CCK or PBCC), or 11 Mbps (CCK or PBCC).

In recent years, more internet of things (internet of things, IoT) devices that are used as STAs emerge in home networks, and even common household appliances also have an attribute of the IoT device by integrating Wi-Fi modules. The IoT device generally has the following features: low costs, low power consumption, low traffic, and wide coverage. In Wi-Fi-based internet of things devices, the 802.11b standard has extremely high potential to have the foregoing features.

In a complex home environment, for example, a common home user generally has only one AP, but IoT devices (for example, smart home devices such as a refrigerator, an air conditioner, a color television, a smart curtain, a smart camera, and a smart home) may be distributed in locations of a home, and in particular, some IoT devices are deployed outdoors or in corners of rooms, for example, a video intercom, a monitoring device, and a sensor device. This imposes a stringent requirement on a coverage capability of a Wi-Fi network.

To resolve the foregoing problem, embodiments of this application provide a new Wi-Fi frame structure. In the Wi-Fi frame structure, a field for enhancing transmission is designed to implement enhanced transmission, to expand coverage of a Wi-Fi network.

The following describes a method in embodiments of this application.

FIG. 4 is a schematic flowchart of a communication method according to an embodiment of this application. For descriptions of a first communication apparatus, a second communication apparatus, and the like, refer to the foregoing descriptions. Details are not described herein again. As shown in FIG. 4, the method 200 includes the following steps.

S210: The first communication apparatus generates a Wi-Fi frame, where the Wi-Fi frame includes a first preamble and a second preamble, and a transmission distance of a synchronization sequence in the first preamble is greater than a transmission distance of a synchronization sequence in the second preamble.

S220: The first communication apparatus sends the Wi-Fi frame to the second communication apparatus, and correspondingly, the second communication apparatus receives the Wi-Fi frame from the first communication apparatus.

It should be noted that the Wi-Fi frame generated by the first communication apparatus has a new frame structure. In the new frame structure, the Wi-Fi frame includes the first preamble and the second preamble, where the transmission distance of the synchronization sequence in the first preamble is greater than the transmission distance of the synchronization sequence in the second preamble. The first communication apparatus sends the Wi-Fi frame to the second communication apparatus, to implement long-range communication between Wi-Fi devices by using the synchronization sequence in the first preamble. In the following descriptions, unless otherwise specified, a Wi-Fi frame is the Wi-Fi frame having the new frame structure provided in this embodiment of this application.

The new frame structure is relative to a frame structure of a Wi-Fi frame defined in a current standard (for example, the 802.11b standard). For ease of differentiation, the Wi-Fi frame having the new frame structure in this embodiment of this application may be referred to as an enhanced Wi-Fi frame, and the Wi-Fi frame defined in the current standard may be referred to as a legacy (legacy) Wi-Fi frame. For example, the Wi-Fi frame shown in FIG. 3 is a legacy Wi-Fi frame. Certainly, this is not limited in this application. Both the enhanced Wi-Fi frame and the legacy Wi-Fi frame may be collectively referred to as a Wi-Fi frame. The second preamble may be a preamble in the legacy Wi-Fi frame, and the first preamble may be a preamble in the enhanced Wi-Fi frame. The first preamble and the second preamble are named only for distinguishing between different preambles. Names of the first preamble and the second preamble are not limited in this application. For example, the first preamble may also be referred to as an enhanced preamble, and the second preamble may also be referred to as a legacy preamble. By analogy, the synchronization sequence in the first preamble may be referred to as an enhanced synchronization sequence, and the synchronization sequence in the second preamble may be referred to as a legacy synchronization sequence.

The first preamble is used to improve a synchronization capability of the Wi-Fi frame, thereby implementing the long-distance transmission between the Wi-Fi devices. It should be understood that an implementation of long-distance transmission of the synchronization sequence in the first preamble is not limited in this application. For example, the long-distance transmission of the synchronization sequence in the first preamble may be implemented in the following manner, or in other words, the transmission distance of the synchronization sequence in the first preamble is related to at least one of the following:
Manner 1: The synchronization sequence in the first preamble is obtained by spreading the synchronization sequence in the second preamble.

In Manner 1, the first communication apparatus may spread a synchronization sequence *b(k)* in the second preamble according to the following formula to obtain a synchronization sequence *c(k)* of the first preamble: $c \left(k\right) = b \left(k\right) ⊗ m \left(l\right) ⊗ p \left(s\right) ,$ $k = 0 , 1 , … , K - 1 ,$ $l = 0 , 1 , … , L - 1 ,$ $s = 0 , 1 , .. , S - 1$

Herein, ⊗ represents a Kronecker product, and *b*(*k*) may be a preamble in the 802.11b standard. Because a synchronization sequence in the 802.11b standard is obtained through spreading, *b*(*k*) may also be referred to as a spreading code. *m*(*l*) represents a spreading sequence, and the spreading sequence may be preset or may be generated based on a preset logic. *b*(*k*) ⊗ *m*(*l*) represents a synchronization symbol that is generated in a spreading manner and that has a longer transmission capability, for example, may be referred to as a super symbol. A sequence represented by *p*(*s*) is used to counteract power spectral density (power spectral density, PSD) unflatness caused by periodicity of a preamble. A length of *p*(*s*) is consistent with a quantity of super symbols. Both *c*(*k*) and *b*(*k*) are sequences including K elements, *m*(*l*) is a sequence including L elements, and *p*(*s*) is a sequence including S elements.

Optionally, in Manner 1, the first communication apparatus may spread the synchronization sequence in the second preamble one or more times to obtain the synchronization sequence in the first preamble. A quantity of spreading times is not limited in this application. In addition, spreading the synchronization sequence in the second preamble to obtain the synchronization sequence in the first preamble is not limited in this application. For example, the synchronization sequence in the first preamble may be a preset bit sequence, and the first communication apparatus may spread the preset bit sequence one or more times to obtain the synchronization sequence in the first preamble.

In Manner 1, the first communication apparatus obtains the first preamble through spreading, to increase a spreading gain of the first communication apparatus, thereby extending a transmission distance of the first preamble.

Manner 2: When the first communication apparatus sends the Wi-Fi frame, transmit power of the synchronization sequence in the first preamble is greater than transmit power of the synchronization sequence in the second preamble. The transmission distance of the synchronization sequence in the first preamble is extended by increasing the transmit power.

Manner 3: The first communication apparatus repeatedly sends the synchronization sequence in the first preamble, or the first preamble in the Wi-Fi frame sent by the first communication apparatus includes a plurality of repeated synchronization sequences. That the first communication apparatus repeatedly sends the synchronization sequence in the first preamble means that the first communication apparatus sends the synchronization sequence in the first preamble two or more times. Similarly, that the first preamble includes the plurality of repeated synchronization sequences means that the first preamble includes at least two synchronization sequences. The transmission distance of the synchronization sequence in the first preamble is extended by repeatedly transmitting the synchronization sequence in the first preamble.

Manner 1 to Manner 3 are merely examples rather than limitations. The first communication apparatus may alternatively extend the transmission distance of the synchronization sequence in the first preamble in another manner. For example, the synchronization sequence in the first preamble is set to a specific bit sequence, and the bit sequence may be determined through an experiment or a test, to ensure that the transmission distance of the synchronization sequence in the first preamble can be extended by using the bit sequence.

The implementations of extending the transmission distance of the synchronization sequence in the first preamble in the foregoing examples may be combined with each other, to achieve more significant enhancement effect.

It should be noted that the Wi-Fi frame provided in this embodiment of this application includes the second preamble, so that compatibility with some Wi-Fi devices (referred to as compatible devices for short below) that perform communication based on a legacy frame structure can be implemented, thereby improving stability of a communication system. When the Wi-Fi frame does not include the second preamble, implementation of long-distance transmission of the Wi-Fi frame is not affected.

After receiving the Wi-Fi frame, the second communication apparatus may obtain the synchronization sequence in the first preamble in the Wi-Fi frame, and then perform signal synchronization based on the synchronization sequence in the first preamble. The second communication apparatus may obtain the synchronization sequence by referring to the foregoing example in which the synchronization sequence in the first preamble in the Wi-Fi frame is obtained, for example, the physical layer baseband processing module of the second communication apparatus performs despreading (or referred to as spectrum despreading, namely, an inverse process of spreading), demodulation, and descrambling (or referred to as code descrambling, namely, an inverse process of scrambling) on the radio frequency signal received by the radio frequency front end through the antenna, to restore the information bit. It should be understood that a manner in which the second communication apparatus receives the Wi-Fi frame and obtains another field in the Wi-Fi frame described below is similar to this manner. For brevity, details are not described again.

In addition to the synchronization sequence, the first preamble in the Wi-Fi frame may include an SFD. Similarly, to implement the long-distance transmission between the Wi-Fi devices, a transmission distance of the SFD in the first preamble is greater than a transmission distance of an SFD in the second preamble. Similar to the synchronization sequence, the SFD in the first preamble may be referred to as an enhanced (enhanced) SFD that is referred to as an eSFD for short, and the SFD in the second preamble may be referred to as a legacy SFD.

Optionally, the SFD in the first preamble may be a preset sequence, and the sequence of the SFD may be agreed on in a protocol.

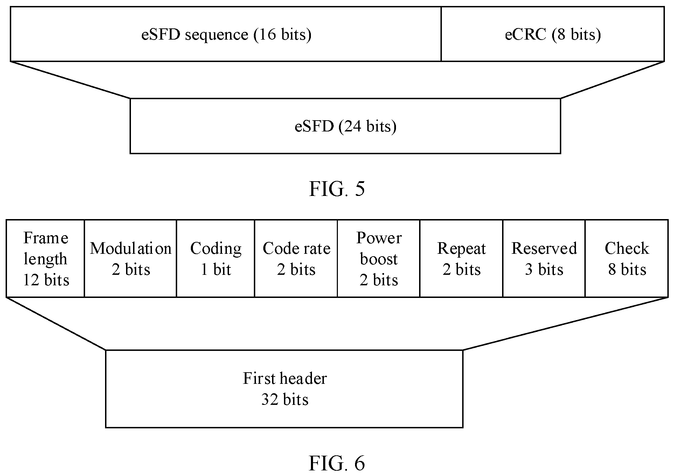

Optionally, the SFD in the first preamble may carry check information. The check information may be, for example, a cyclic redundancy check (cyclic redundancy check, CRC) code. The CRC carried in the SFD in the first preamble may be referred to as an enhanced CRC (namely, an eCRC). For example, with reference to FIG. 5, the eSFD may occupy 24 bits, where the sequence of the eSFD occupies 16 bits, and the eCRC occupies 8 bits. For example, the sequence of the eSFD is [1000110011101111], and a sequence of the eCRC is [11000001].

It should be understood that an implementation of long-distance transmission of the SFD in the first preamble is not limited in this application. For example, the long-distance transmission of the SFD in the first preamble may be implemented in the following manner, or in other words, the transmission distance of the SFD in the first preamble is related to at least one of the following:
Manner 1: The first communication apparatus encodes the SFD in the first preamble by using an FEC technology. FEC is an encoding technology widely applied to communication systems, enhances an anti-interference capability of encoded content and strengthens both encoding error correction and error detection capabilities by adding redundancy check information, and effectively reduces a system bit error rate and extends a transmission distance with quite low redundancy overheads.

Optionally, the FEC technology includes a plurality of encoding types, for example, binary convolutional coding (binary convolutional coding, BCC), Hamming code (hamming code), Golay (Golay) code, error correction code (bose-chaudhuri-hocquenghem code), low-density parity-check (low-density parity-check, LDPC) code, concatenated code (turbo code), and polar code (polar code). An encoding mode of the SFD in the first preamble is not limited in this application.

Manner 2: When the first communication apparatus sends the Wi-Fi frame, transmit power of the SFD in the first preamble is greater than transmit power of the SFD in the second preamble. The transmission distance of the SFD in the first preamble is extended by increasing the transmit power.

Manner 3: The first communication apparatus repeatedly sends the SFD in the first preamble, or the first preamble in the Wi-Fi frame sent by the first communication apparatus includes a plurality of repeated SFDs. That the first communication apparatus repeatedly sends the SFD in the first preamble means that the first communication apparatus sends the SFD in the first preamble two or more times. Similarly, that the first preamble includes the plurality of repeated SFDs means that the first preamble includes at least two SFDs. The transmission distance of the SFD in the first preamble is extended by repeatedly transmitting the SFD in the first preamble.

In Manner 1 to Manner 3, the implementations of extending the transmission distance of the synchronization sequence in the first preamble may be combined with each other, to achieve more significant enhancement effect.

In some embodiments, the Wi-Fi frame may further include a first header and a second header, and a transmission distance of the first header is greater than a transmission distance of the second header. The SFD in the first preamble may indicate to receive the first header (header) in the Wi-Fi frame. Specifically, the first preamble may be used to identify a sequence boundary of the first header in the Wi-Fi frame. Similarly, the SFD in the second preamble may indicate to receive the second header (header) in the Wi-Fi frame. Specifically, the second preamble may be used to identify a sequence boundary of the second header in the Wi-Fi frame. The first header and the second header are named only for distinguishing between different headers. Names of the first header and the second header are not limited in this application. For example, the first header may alternatively be referred to as an enhanced header (eHeader), and the second header may be referred to as a legacy header.

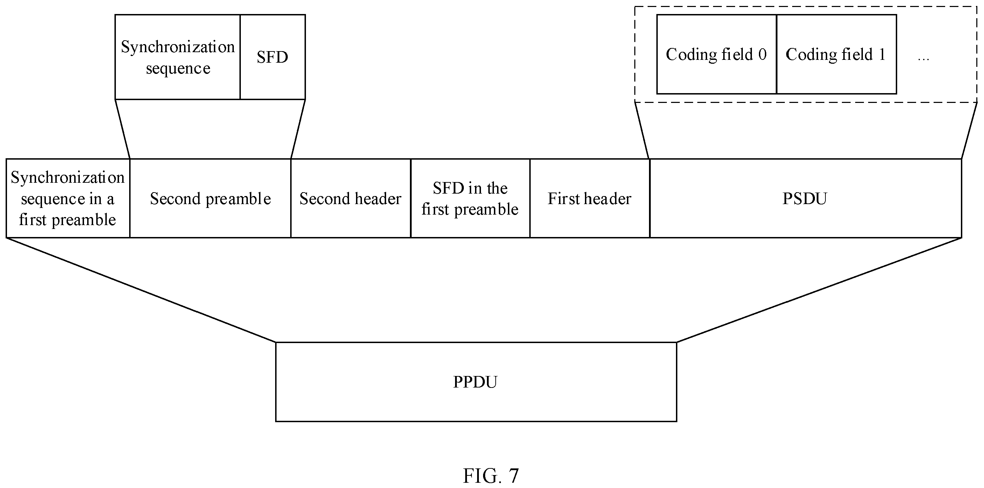

For example, the Wi-Fi frame may further include a PSDU. The PSDU may alternatively be referred to as a payload (payload). The PSDU may include a plurality of coding fields, for example, a coding field 0, a coding field 1, ..., in FIG. 7. Optionally, compared with a PSDU in the legacy Wi-Fi frame, the PSDU also has a longer transmission distance.

Optionally, the PSDU may further include check information, for example, a CRC. When long-distance transmission of the PSDU is implemented, the check information in the PSDU may be an enhanced CRC, for example, an eCRC. For example, the first communication apparatus may segment, according to a specific rule, scrambled information bits from a MAC source into a plurality of coding fields that meet a coding rule, and add check information to each coding field obtained through segmentation, so that the second communication apparatus assists in decoding and checking data by using the check information.

For example, information about the first header may include information related to the PSDU in the Wi-Fi frame, and is used by the second communication apparatus to demodulate the PSDU. For example, the information about the first header includes at least one of a length of the PSDU, FEC encoding information of the PSDU, information about repeated sending of the PSDU, power enhancement information of the PSDU, and modulation information of the PSDU, so that the second communication apparatus receives the PSDU based on the first header. It may be understood that, when the first communication apparatus modulates the PSDU by using the FEC technology, the first header includes the FEC encoding information of the PSDU; when the first communication apparatus repeatedly sends the PSDU, the first header includes the information about repeated sending of the PSDU; when the first communication apparatus implements the long-distance transmission of the PSDU by increasing the transmit power of the PSDU, the first header includes the power enhancement information of the PSDU. Optionally, the power enhancement information may be transmit power of the PSDU, or the power enhancement information may be a difference between the transmit power of the PSDU in the Wi-Fi frame proposed in this application and transmit power of the PSDU in a legacy Wi-Fi frame. In addition, the information about the first header may further include other related information of the PSDU that is not enumerated.

For example, the information about the first header may include a reserved (reserved) field, where the reserved field is reserved for a subsequent extended function.

For example, the information about the first header may carry check information, where the check information may be, for example, a CRC code, and the CRC carried in the first header may be referred to as an enhanced CRC (namely, an eCRC).

Refer to an example in FIG. 6. The first header includes a frame length field, a modulation field, a coding field, a code rate field, a power boost field, a repeat field, a reserved field, and a check field. Because the first header is an enhanced header (for example, an eHeader), all fields in the first header may be enhanced fields. For example, the frame length field may be referred to as an enhanced frame length (eLength) field, the modulation field may be referred to as an enhanced modulation (eMod) field, the coding field may be referred to as an enhanced coding (eCoding) field, the code rate field may be referred to as an enhanced code rate (eCodeRate) field, the power boost field may be referred to as an incremental power boost (ePowerBoost), the repeat field may be referred to as an enhanced repeat (eRepeat) field, and the check field may be referred to as an enhanced check (eCRC) field. The eLength field may indicate the length of the PSDU. The eMod field may indicate the modulation information of the PSDU. The eCoding field may indicate the FEC encoding information of the PSDU, where the encoding information may include, for example, the encoding type listed in the foregoing example. The eCodeRate field may indicate a code rate of the PSDU, for example, a ratio of a quantity of valid bits before encoding to a quantity of valid bits after encoding. The ePowerBoost field may indicate the power enhancement information of the PSDU. The eRepeat field may indicate the information about repeated sending of the PSDU. For example, the eHeader may occupy 32 bits, the eLength field may occupy 12 bits in the eHeader, the eMod field may occupy 2 bits in the eHeader, the eCoding field may occupy 1 bit in the eHeader, the eCodeRate field may occupy 2 bits in the eHeader, the ePowerBoost may occupy 2 bits in the eHeader, the eRepeat may occupy 2 bits in the eHeader, the reserved field may occupy 3 bits in the eHeader, and the eCRC may occupy 8 bits in the eHeader. It should be noted that the eHeader may include more or fewer fields. This is not limited in this application. In addition, a quantity of bits occupied by the eHeader and a quantity of bits occupied by each field in the eHeader are not limited in this application.

An implementation of long-distance transmission of the first header is not limited in this application. For example, the long-distance transmission of the first header may be implemented in the following manner, or in other words, the transmission distance of the first header is related to at least one of the following:
Implementation 1: The first communication apparatus encodes the first header by using the FEC technology, to extend the transmission distance.
Implementation 2: When the first communication apparatus sends the Wi-Fi frame, transmit power of the first header is greater than transmit power of the second header. The transmission distance of the first header is extended by increasing the transmit power.
Implementation 3: The first communication apparatus repeatedly sends the first header, or there are a plurality of repeated first headers in the Wi-Fi frame sent by the first communication apparatus. The transmission distance of the first header is extended by repeatedly transmitting the first header.

The implementation of the long-distance transmission of the first header is similar to the foregoing implementation of the long-distance transmission of the SFD in the first preamble. For a specific implementation process, refer to the foregoing example. For brevity, details are not described again.

Similar to the first header, an implementation of the long-distance transmission of the PSDU is not limited in this application. For example, the long-distance transmission of the PSDU may be implemented in the following manner, or in other words, a transmission distance of the PSDU is related to at least one of the following:
Implementation 1: The first communication apparatus encodes the PSDU by using the FEC technology, to extend the transmission distance.
Implementation 2: When the first communication apparatus sends the Wi-Fi frame, transmit power of the PSDU is greater than transmit power of the PSDU in a legacy Wi-Fi frame. The transmission distance of the PSDU is extended by increasing the transmit power.
Implementation 3: The first communication apparatus repeatedly sends the PSDU, or there are a plurality of repeated PSDUs in the Wi-Fi frame sent by the first communication apparatus. The transmission distance of the PSDU is extended by repeatedly transmitting the PSDU.

The implementation of the long-distance transmission of the PSDU is similar to the foregoing implementation of the long-distance transmission of the SFD in the first preamble. For a specific implementation process, refer to the foregoing example. For brevity, details are not described again.

For example, the second header may include a bit used to carry indication information, and the indication information indicates a type of the Wi-Fi frame, for example, the Wi-Fi frame is an enhanced Wi-Fi frame or a legacy Wi-Fi frame. The indication information is used by a compatible device to identify whether the Wi-Fi frame is a legacy Wi-Fi frame. When the Wi-Fi frame is a legacy Wi-Fi frame, the compatible device may perform subsequent processing on the Wi-Fi frame, such as despreading, demodulation, and descrambling. When the Wi-Fi frame is not a legacy Wi-Fi frame, the compatible device may end candidate processing on the Wi-Fi frame. Therefore, the indication information may indicate whether the Wi-Fi frame is a legacy Wi-Fi frame. For example, when the indication information is 0, it indicates that the Wi-Fi frame is a legacy Wi-Fi frame, and when the indication information is 1, it indicates that the Wi-Fi frame is not a legacy Wi-Fi frame.

Optionally, the bit used to carry the indication information may be a bit in a reserved field of the second header. In other words, the indication information may occupy the reserved field in the second header, to avoid occupying another field in the second header, without affecting transmission of other signaling.

For example, the second header may include a length field, and the length field indicates the length of the PSDU in the Wi-Fi frame, to implement downward compatibility.

The following describes an example of a frame structure of the Wi-Fi frame according to an embodiment of this application with reference to FIG. 7.

With reference to FIG. 7, the Wi-Fi frame sequentially includes the synchronization sequence in the first preamble, the synchronization sequence in the second preamble, the SFD in the second preamble, the second header, the SFD in the first preamble, the first header, and the PSDU. It can be learned from the foregoing example that, in the Wi-Fi frame, fields that can implement long-distance transmission include: the synchronization sequence in the first preamble, the SFD in the first preamble, the first header, and the PSDU. The synchronization sequence in the second preamble, the SFD in the second preamble, and the second header are used to improve communication compatibility.

Refer to FIG. 7. The second preamble and the second header may be deployed before the SFD of the first preamble. It should be understood that the second preamble and the second header are deployed before the SFD of the first preamble, to avoid interfering with receiving of a data part following the SFD.

Refer to FIG. 7. The second preamble and the second header may be deployed after the synchronization sequence of the first preamble. For example, after the second communication apparatus completes synchronization based on the synchronization sequence of the first preamble, the second communication apparatus may use at least one of the synchronization sequence in the second preamble, the SFD in the second preamble, and the second header as a known sequence, and process the known sequence by using an algorithm, to further improve system performance. For example, at least one of the synchronization sequence in the second preamble, the SFD in the second preamble, and the second header is used to enhance channel estimation, enhance equalizer training, and the like, to improve subsequent demodulation capabilities of the enhanced SFD, the enhanced header (header) (or referred to as the first header), and the PSDU.

It should be understood that the frame structure shown in FIG. 7 is merely an example rather than a restrictive description. During actual application, the Wi-Fi frame may include more or fewer fields than those shown in FIG. 7.

In some embodiments, the second preamble and the second header may alternatively be before the first preamble, that is, the synchronization sequence in the first preamble is adjacent to the SFD in the first preamble. The second preamble and the second header are deployed before the enhanced synchronization sequence, so that the compatible device can identify the type of the Wi-Fi frame as early as possible, for example, the Wi-Fi frame is an enhanced Wi-Fi frame or a legacy Wi-Fi frame. When the Wi-Fi frame is identified as an enhanced Wi-Fi frame, the compatible device may end subsequent processing on the Wi-Fi frame, such as despreading, demodulation, and descrambling, thereby reducing resource overheads.

The following describes a communication apparatus provided in embodiments of this application.

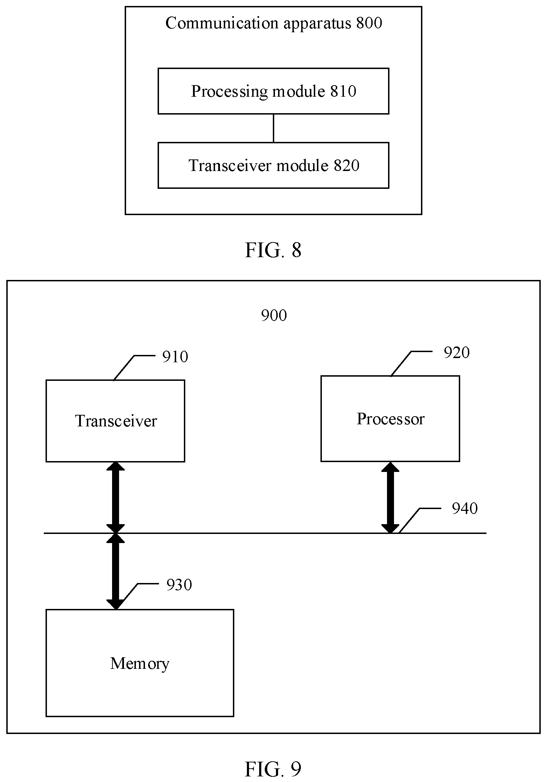

In this application, the communication apparatus is divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in this application, division into the modules is an example, is merely logical function division, and may be other division during actual implementation. The following describes in detail a communication apparatus in embodiments of this application with reference to FIG. 8 to FIG. 10.

FIG. 8 is a diagram of a structure of a communication apparatus according to an embodiment of this application. As shown in FIG. 8, the communication apparatus includes a processing module 810 and a transceiver module 820. The transceiver module 820 may implement a corresponding communication function, and the processing module 810 is configured to implement a corresponding processing function. For example, the transceiver module 820 may also be referred to as an interface, a communication interface, or a communication module.

In some embodiments of this application, the communication apparatus may be configured to perform an action performed by the first communication apparatus in the foregoing method embodiments. In this case, the first communication apparatus may be a Wi-Fi device, or may be a chip, a functional module, or the like that is configured in the device. The processing module 810 is configured to perform a process-related operation of the first communication apparatus in the foregoing method embodiments, and the transceiver module 820 is configured to perform a receiving/sending-related operation of the first communication apparatus in the foregoing method embodiments.

For example, the processing module 810 may be configured to generate a Wi-Fi frame, where the Wi-Fi frame includes a first preamble and a second preamble, and a transmission distance of a synchronization sequence in the first preamble is greater than a transmission distance of a synchronization sequence in the second preamble; and the transceiver module 820 may be configured to send the Wi-Fi frame.

In some other embodiments of this application, the communication apparatus may be configured to perform an action performed by the second communication apparatus in the foregoing method embodiments. In this case, the communication apparatus may be a Wi-Fi device, or may be a chip, a functional module, or the like that is configured in the device. The processing module 810 is configured to perform a process-related operation of the second communication apparatus in the foregoing method embodiments, and the transceiver module 820 is configured to perform a receiving/sending-related operation of the second communication apparatus in the foregoing method embodiments.

For example, the transceiver module 820 may be configured to receive a Wi-Fi frame, where the Wi-Fi frame includes a first preamble and a second preamble, and a transmission distance of a synchronization sequence in the first preamble is greater than a transmission distance of a synchronization sequence in the second preamble; and the processing module 810 may be configured to obtain the synchronization sequence in the first preamble.

Optionally, in the foregoing embodiments, the communication apparatus may further include a storage module. The storage module may be configured to store instructions and/or data, and the processing unit 801 may read the instructions and/or the data in the storage module, to enable the communication apparatus to implement the foregoing method embodiments. For example, the storage module may further store a CPM coefficient, the indication information, or the like in a matrix prototype of a check matrix shown above.

In the foregoing embodiments, for specific descriptions of terms or steps such as a reference check matrix, the check matrix, the prototype of the check matrix, a prototype of the reference check matrix, the CPM, a number of cyclic shift bits, a lifting factor, a code length, and a code rate, refer to the descriptions in the foregoing method embodiments. Details are not described herein again.

Specific descriptions of the transceiver module and the processing module shown in the foregoing embodiments are merely examples. For specific functions or steps performed by the transceiver module and the processing module, refer to the foregoing method embodiments. Details are not described herein again.

The foregoing describes the communication apparatus in embodiments of this application. The following describes a possible product form of the communication apparatus. Any form of product that has a function of the communication apparatus in FIG. 8 falls within the protection scope of embodiments of this application. The following descriptions are merely examples, and a product form of the communication apparatus in embodiments of this application is not limited thereto.

In a possible implementation, in the communication apparatus shown in FIG. 8, the processing module 810 may be one or more processors, and the transceiver module 820 may be a transceiver; or the transceiver module 820 may be a sending module and a receiving module. The sending module may be a transmitter, and the receiving module may be a receiver. The sending module and the receiving module are integrated into one component, for example, a transceiver. In this embodiment of this application, the processor and the transceiver may be coupled to each other or the like. A manner of connecting the processor to the transceiver is not limited in embodiments of this application. In a process of performing the foregoing method, a process of sending information in the foregoing method may be a process of outputting the information by the processor. When outputting the information, the processor outputs the information to the transceiver, so that the transceiver transmits the information. After the information is outputted by the processor, other processing may further need to be performed on the information before the information arrives at the transceiver. Similarly, a process of receiving information in the foregoing method may be a process of receiving the input information by the processor. When the processor receives the input information, the transceiver receives the information, and inputs the information into the processor. Further, after the transceiver receives the information, other processing may need to be performed on the information before processed information is input into the processor.

As shown in FIG. 9, a communication apparatus 900 includes one or more transceivers 910 and a processor 920.

In some embodiments of this application, the communication apparatus may be configured to perform a step, a method, or a function performed by the first communication apparatus or the second communication apparatus. For example, the transceiver 910 may be configured to perform a function or a step implemented by the transceiver module 820 shown in FIG. 8, and the processor 920 may be configured to perform a function or a step implemented by the processing module 810 shown in FIG. 8. For specific descriptions of the transceiver 910 and the processor 920, refer to FIG. 8 or the method embodiments shown above. Details are not described herein again.

In implementations of the communication apparatus shown in FIG. 9, the transceiver may include a receiver and a transmitter. The receiver is configured to perform a receiving function (or operation), and the transmitter is configured to perform a transmitting function (or operation). The transceiver is configured to communicate with another device/apparatus through a transmission medium.

Optionally, the communication apparatus 900 may further include one or more memories 930, configured to store program instructions and/or data. The memory 930 is coupled to the processor 920. Couplings in embodiments of this application are indirect couplings or communication connections between communication apparatuses, units, or modules, may be in an electrical form, a mechanical form, or another form, and are used for information exchange between the communication apparatuses, the units, or the modules. The processor 920 may operate in cooperation with the memory 930. The processor 920 may execute the program instructions stored in the memory 930. Optionally, at least one of the one or more memories may be included in the processor.

A specific connection medium between the transceiver 910, the processor 920, and the memory 930 is not limited in embodiments of this application. In this embodiment of this application, the memory 930, the processor 920, and the transceiver 910 are connected to each other through a bus 940 in FIG. 9. The bus is represented by a bold line in FIG. 9. A manner of connection between other components is merely an example for description, and is not limited thereto. The bus may be classified into an address bus, a data bus, a control bus, and the like. For ease of representation, only one bold line represents the bus in FIG. 9, but this does not mean that there is only one bus or only one type of bus.

In embodiments of this application, the processor may be a general-purpose processor, a digital signal processor, an application-specific integrated circuit, a field programmable gate array or another programmable logic device, a discrete gate or a transistor logic device, a discrete hardware component, or the like, and can implement or perform the methods, the steps, and the logical block diagrams disclosed in embodiments of this application. The general-purpose processor may be a microprocessor, any conventional processor, or the like. The steps of the methods disclosed with reference to embodiments of this application may be directly implemented by a hardware processor, or may be implemented by using a combination of hardware and a software module in the processor, or the like.

In embodiments of this application, the memory may include but is not limited to a non-volatile memory like a hard disk drive (hard disk drive, HDD) or a solid-state drive (solid-state drive, SSD), a random access memory (Random Access Memory, RAM), an erasable programmable read-only memory (Erasable Programmable ROM, EPROM), a read-only memory (Read-Only Memory, ROM), or a portable read-only memory (Compact Disc Read-Only Memory, CD-ROM). The memory is any storage medium that can be used to carry or store program code in a form of an instruction or a data structure and that can be read and/or written by a computer (for example, the communication apparatus shown in this application), but is not limited thereto. The memory in this embodiment of this application may alternatively be a circuit or any other apparatus that can implement a storage function, and is configured to store program instructions and/or data.

The processor 920 is mainly configured to: process a communication protocol and communication data, control the entire communication apparatus, execute a software program, and process data of the software program. The memory 930 is mainly configured to store the software program and data. The transceiver 910 may include a control circuit and an antenna. The control circuit is mainly configured to: perform conversion between a baseband signal and a radio frequency signal and process the radio frequency signal. The antenna is mainly configured to receive/send a radio frequency signal in a form of an electromagnetic wave. An input/output apparatus like a touchscreen, a display, or a keyboard is mainly configured to: receive data input by a user and output data to the user.

After the communication apparatus is powered on, the processor 920 may read the software program in the memory 930, interpret and execute instructions of the software program, and process the data of the software program. When data needs to be sent wirelessly, the processor 920 performs baseband processing on the to-be-sent data, and then outputs a baseband signal to a radio frequency circuit. The radio frequency circuit performs radio frequency processing on the baseband signal, and then sends, through the antenna, a radio frequency signal in a form of an electromagnetic wave. When data is sent to the communication apparatus, the radio frequency circuit receives a radio frequency signal through the antenna, converts the radio frequency signal into a baseband signal, and outputs the baseband signal to the processor 920. The processor 920 converts the baseband signal into data, and processes the data.

In another implementation, the radio frequency circuit and the antenna may be disposed independently of the processor that performs baseband processing. For example, in a distributed scenario, the radio frequency circuit and the antenna may be disposed remotely and independently of the communication apparatus.

The communication apparatus shown in this embodiment of this application may further have more components than those in FIG. 9, or the like. This is not limited in embodiments of this application. The methods performed by the processor and the transceiver are merely examples. For specific steps performed by the processor and the transceiver, refer to the methods described above.

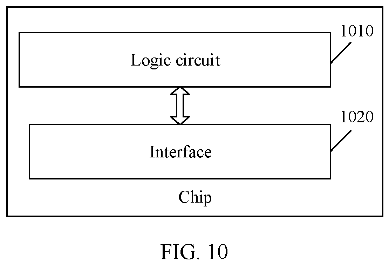

In another possible implementation, in the communication apparatus shown in FIG. 8, the processing module 810 may be one or more logic circuits, and the transceiver module 820 may be an input/output interface, or may be referred to as a communication interface, an interface circuit, an interface, or the like. Alternatively, the transceiver module 820 may be a sending module and a receiving module. The sending module may be an output interface, and the receiving module may be an input interface. The sending module and the receiving module are integrated into one module, for example, an input/output interface. As shown in FIG. 10, a communication apparatus shown in FIG. 10 includes a logic circuit 1010 and an interface 1020. To be specific, the processing module 810 may be implemented by using the logic circuit 1010, and the transceiver module 820 may be implemented by using the interface 1020. The logic circuit 1010 may be a chip, a processing circuit, an integrated circuit, a system on chip (system on chip, SoC), or the like. The interface 1020 may be a communication interface, an input/output interface, a pin, or the like. For example, FIG. 10 shows an example in which the communication apparatus is a chip. The chip includes the logic circuit 1010 and the interface 1020.

In this embodiment of this application, the logic circuit and the interface may be further coupled to each other. A specific manner of connection between the logic circuit and the interface is not limited in embodiments of this application. For example, the logic circuit 1010 may be configured to perform a function or a step implemented by the processing module 810 shown in FIG. 8, and the interface 1020 may be configured to perform a function or a step implemented by the transceiver module 820 shown in FIG. 8. For specific descriptions of the logic circuit 1010 and the interface 1020, refer to FIG. 8 or the method embodiments shown above. Details are not described herein again.

The communication apparatus shown in this embodiment of this application may implement the methods provided in embodiments of this application in a form of hardware, or may implement the methods provided in embodiments of this application in a form of software. This is not limited in embodiments of this application.

An embodiment of this application further provides a communication system. The communication system includes a first communication apparatus and a second communication apparatus. The first communication apparatus and the second communication apparatus may be configured to perform the method in any one of the foregoing embodiments.

In addition, this application further provides a computer program. The computer program is configured to implement operations and/or processing performed by communication apparatuses in the method provided in this application.

This application further provides a computer-readable storage medium. The computer-readable storage medium stores computer code. When the computer code is run on a computer, the computer is enabled to perform operations and/or processing performed by communication apparatuses in the method provided in this application.

This application further provides a computer program product. The computer program product includes computer code or a computer program. When the computer code or the computer program is run on a computer, operations and/or processing performed by communication apparatuses in the method provided in this application are/is performed.

In the several embodiments provided in this application, it should be understood that the disclosed system, communication apparatus, and method may be implemented in other manners. For example, the described communication apparatus embodiments are merely examples. For example, the foregoing module division is merely logical function division and there may be another division manner during actual implementation. For example, a plurality of modules or components may be combined or integrated into another system, or some features may be ignored or not performed. In addition, the displayed or discussed mutual couplings or direct couplings or communication connections may be implemented through some interfaces. The indirect couplings or communication connections between the communication apparatuses or modules may be implemented in electronic, mechanical, or other forms.

The modules described as separate parts may or may not be physically separate, and the parts displayed as modules may or may not be physical modules, that is, may be located in one place, or may be distributed on a plurality of network modules. A part or all of the modules may be selected based on an actual requirement, to achieve technical effect of the solutions provided in embodiments of this application.

In addition, functional modules in embodiments of this application may be integrated into one processing module, or each of the modules may exist alone physically, or two or more modules may be integrated into one module. The integrated module may be implemented in a form of hardware, or may be implemented in a form of a software functional module.

The integrated module may be stored in a computer-readable storage medium when the integrated module is implemented in the form of the software functional module and sold or used as an independent product. Based on such an understanding, the technical solutions of this application essentially, or the part contributing to the conventional technologies, or all or a part of the technical solutions may be implemented in a form of a software product. The computer software product is stored in a readable storage medium and includes several instructions for instructing a computer device (which may be a personal computer, a server, a network device, or the like) to perform all or a part of the steps of the methods described in embodiments of this application. The readable storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
generating a Wi-Fi frame, wherein the Wi-Fi frame comprises a first preamble and a second preamble, and a transmission distance of a synchronization sequence in the first preamble is greater than a transmission distance of a synchronization sequence in the second preamble; and
sending the Wi-Fi frame.

2. A communication method, comprising:
receiving a Wi-Fi frame, wherein the Wi-Fi frame comprises a first preamble and a second preamble, and a transmission distance of a synchronization sequence in the first preamble is greater than a transmission distance of a synchronization sequence in the second preamble; and
obtaining the synchronization sequence in the first preamble.

3. The method according to claim 1 or 2, wherein the transmission distance of the synchronization sequence in the first preamble is related to at least one of the following:
the synchronization sequence in the first preamble is obtained by spreading the synchronization sequence in the second preamble;
transmit power of the synchronization sequence in the first preamble is greater than transmit power of the synchronization sequence in the second preamble; or
the synchronization sequence in the first preamble is repeatedly sent, or the first preamble comprises a plurality of repeated synchronization sequences.

4. The method according to any one of claims 1 to 3, wherein a transmission distance of a start frame delimiter SFD in the first preamble is greater than a transmission distance of an SFD in the second preamble.

5. The method according to any one of claims 1 to 4, wherein the second preamble precedes the SFD in the first preamble.

6. The method according to claim 4 or 5, wherein the transmission distance of the SFD in the first preamble is related to at least one of the following:
the SFD in the first preamble is encoded by using a forward error correction FEC technology;
transmit power of the SFD in the first preamble is greater than transmit power of the SFD in the second preamble; or
the SFD in the first preamble is repeatedly sent, or the first preamble comprises a plurality of repeated SFDs.

7. The method according to any one of claims 4 to 6, wherein the SFD in the first preamble carries check information.

8. The method according to any one of claims 1 to 7, wherein the Wi-Fi frame further comprises a first header and a second header, and a transmission distance of the first header is greater than a transmission distance of the second header.

9. The method according to claim 8, wherein the SFD in the first preamble indicates to receive the first header.

10. The method according to claim 8, wherein the second header precedes the SFD in the first preamble.

11. The method according to any one of claims 8 to 10, wherein information about the first header comprises at least one of the following:
a length of a physical layer service data unit PSDU in the Wi-Fi frame;
FEC encoding information of the PSDU in the Wi-Fi frame;
information about repeated sending of the PSDU in the Wi-Fi frame;
power enhancement information of the PSDU in the Wi-Fi frame;
modulation information of the PSDU in the Wi-Fi frame;
a reserved field of the first header; or
check information of the first header.

12. The method according to any one of claims 8 to 10, wherein the transmission distance of the first header is related to at least one of the following:
the first header is encoded by using the FEC technology;
transmit power of the first header is greater than transmit power of the second header; or
the first header is repeatedly sent, or the Wi-Fi frame comprises a plurality of repeated first headers.

13. The method according to any one of claims 8 to 12, wherein the second header comprises a bit used to carry indication information, and the indication information indicates whether the Wi-Fi frame is a legacy Wi-Fi frame.

14. The method according to claim 13, wherein a reserved field of the second header is used to carry the indication information.

15. The method according to any one of claims 8 to 14, wherein the second header comprises a length field, and the length field indicates the length of the PSDU in the Wi-Fi frame.

16. The method according to any one of claims 1 to 15, wherein the Wi-Fi frame further comprises the PSDU, and a transmission distance of the PSDU is related to at least one of the following:
the PSDU is encoded by using the FEC technology;
transmit power of the PSDU is greater than transmit power of a legacy PSDU; or
the PSDU is repeatedly sent, or the Wi-Fi frame comprises a plurality of repeated PSDUs.

17. The method according to claim 16, wherein the PSDU carries check information.

18. A communication apparatus, comprising a module configured to perform the method according to any one of claims 1 to 17.

19. A communication apparatus, comprising a processor, wherein the processor is configured to perform the method according to any one of claims 1 to 17.

20. A communication apparatus, comprising a logic circuit and an interface, wherein the logic circuit is coupled to the interface; and
the interface is configured to input and/or output information, and the logic circuit is configured to perform the method according to any one of claims 1 to 17.

21. A computer-readable storage medium, wherein the computer-readable storage medium is configured to store a computer program, and when the computer program is executed, the method according to any one of claims 1 to 17 is performed.

22. A computer program product, wherein when the computer program product is executed, the method according to any one of claims 1 to 17 is performed.

23. A communication system, wherein the communication system comprises a first communication apparatus and a second communication apparatus, the first communication apparatus is configured to perform the method according to any one of claims 1 and 3 to 17, and the second communication apparatus is configured to perform the method according to any one of claims 2 to 17.
